# EUROPÄISCHE PATENTSCHRIFT

(11) **EP 2 588 294 B1**
(45) Veröffentlichungstag und Bekanntmachung des Hinweises auf die Patenterteilung: **26.12.2018**
(21) Anmeldenummer: 11726357.4
(22) Anmeldetag: 17.06.2011
(51) Int. Cl.: B29C 49/20

(54) **VERFAHREN ZUR HERSTELLUNG EINES KUNSTSTOFFARTIKELS SOWIE BLASFORMWERKZEUG ZUR DURCHFÜHRUNG DES VERFAHRENS**
METHOD FOR PRODUCING A PLASTICS ARTICLE AND BLOW MOULD FOR CARRYING OUT THE METHOD
PROCÉDÉ POUR PRODUIRE UN ARTICLE EN MATIÈRE PLASTIQUE ET OUTIL DE SOUFFLAGE POUR LA MISE EN OEUVRE DE CE PROCÉDÉ

(30) Priorität: 02.07.2010 DE 102010025937
(43) Veröffentlichungstag der Anmeldung: 08.05.2013
(73) Patentinhaber: Kautex Maschinenbau GmbH, 53229 Bonn (DE)
(72) Erfinder: KLEIN, Martin, 53757 St. Augustin (DE)
(74) Vertreter: Richly & Ritschel Patentanwälte PartG mbB
(86) Internationale Anmeldenummer: PCT/EP2011/003026
(87) Internationale Veröffentlichungsnummer: WO 2012/000621

(56) Entgegenhaltungen:
- EP-A2- 1 238 845
- WO-A2-2010/149336
- DE-A1- 2 933 212
- DE-A1- 10 205 524
- DE-A1-102008 027 824
- DE-B- 1 245 579
- DE-B1- 1 454 947
- JP-A- 4 193 521
- JP-A- 56 051 333

## Beschreibung

Die Erfindung betrifft ein Verfahren zur Herstellung eines Kunststoffartikels sowie ein Blasformwerkzeug zur Durchführung des Verfahrens.

Insbesondere bei der Herstellung großer Kunststoffbehälter durch Extrusionsblasformen ist häufig wünschenswert, in den fertigzustellenden Behälter Einbauteile einzubringen. Beispielsweise Kraftstoffbehälter für Kraftfahrzeuge aus thermoplastischem Kunststoff sind häufig mit Funktionsbauteilen/Einbauteilen versehen, die entweder nach der Herstellung des Behälters manuell durch eine oder mehrere in diesem vorgesehene Revisionsöffnungen eingebracht werden, oder die während der Ausformung des Behälters durch Extrusionsblasformen mit umblasen werden. Hierzu ist bekannt, die in den Behälter einzubringenden Einbauteile auf einem Dorn/Träger zu platzieren und zwischen den geöffneten Hälften eines Blasformwerkzeugs so anzuordnen, dass der über dem Blasformwerkzeug extrudierte Vorformlingsschlauch aus thermoplastischem Material über den Träger und die auf diesem angeordneten Bauteile extrudiert wird. Dabei wird der Schlauch über den Funktionsbauteilträger und die Funktionsbauteile gestülpt. Sodann werden die Formhälften des Blasformwerkzeugs um den Träger und die auf diesem angeordneten Funktionsbauteile geschlossen. Die Funktionsbauteile werden unmittelbar vor oder während des Fertigblasens des fertigen Artikels innerhalb des geschlossenen Blasformwerkzeugs mit der Wandung des späteren Behälters verschweißt.

Ein solches Verfahren ist beispielsweise aus der DE 602 18 237 T2 bekannt. Das dort beschriebene Umblasen von Einbauteilen nach dem Flaschenschiff-Prinzip wird unter anderem auch dann angewendet, wenn die in den Behälter einzubringenden Einbauteile größer als die in diesem vorzusehenden Revisionsöffnungen sind.

Insbesondere bei Kraftstoffbehältern aus thermoplastischem Kunststoff ist problematisch, dass die hierfür verwendeten Kunststoffe, in der Regel HDPE, nicht für Kohlenwasserstoffe diffusionsdicht sind. Deswegen werden Kraftstoffbehälter aus thermoplastischem Kunststoff aus Co-Extrudaten mit Barriereschichten für Kohlenwasserstoffe hergestellt. Hiermit ist es möglich, weitestgehend die Dichtigkeit des Systems Kraftstoffbehälter zu gewährleisten, wobei jedoch bei mehrlagigem Wandaufbau die Barriereschicht durch nachträglich anzubringende Öffnungen in der Behälterwandung verletzt/unterbrochen wird, so dass im Bereich von Auskreisungen und/oder Wartungsöffnungen in der Behälterwandung potentielle Leckagestellen geschaffen werden, die nach Fertigstellung des Behälters aufwändig abzudichten sind.

In jüngster Zeit gehen daher alle Bemühungen dahin, möglichst alle Einbauteile bereits während der Herstellung des Kraftstoffbehälters in diesen einzubringen, um die Anzahl der erforderlichen Öffnungen in der Behälterwandung so klein wie möglich zu halten.

Das sog. "Umblasen" von Einbauteilen wird zwar dieser Problematik hinsichtlich der Größe der benötigten Öffnungen in der Behälterwandung gerecht, die Befestigung einiger der Einbauteile, wie beispielsweise Ventile oder dergleichen, erfordert dennoch unter Umständen eine Verletzung der Behälterwandung im Sinne eines Durchstoßens oder Durchdringens, so dass die Anzahl der benötigten Öffnungen hierdurch nicht deutlich reduziert wird.

Als Alternative zu dem vorbeschriebenen Verfahren ist das Thermoformen von bahnförmigen Vorformlingen bekannt, die jeweils aus schlauchförmigen Extrudaten mit einem geschlossenen Querschnitt erhalten wurden. Verfahren zur Verarbeitung bahnförmiger bzw. lappenförmiger Extrudate mit mehrteiligen Werkzeugen nach Art von Blasformwerkzeugen werden auch als sog. "Twin Sheet Blow Molding-Verfahren" bezeichnet. Mit solchen Verfahren besteht grundsätzlich die Möglichkeit, Einbauteile im Innern der zu fertigenden Behälter noch während der Ausformung der Hohlkörper einzubringen, wobei es möglich ist, die Einbauteile an beliebiger Stelle in einem beliebigen Layout an der Innenseite des Behälters vorzusehen.

In der EP 110 697 B1 wird beispielsweise ein Verfahren beschrieben, bei dem das aus dem Extrusionskopf austretende Extrudat mit einem geschlossenen Querschnitt an zwei diametral gegenüberliegenden Seiten aufgetrennt wird, so dass zwei bahnförmige Vorformlinge erhalten werden, die mit Hilfe einer Führungseinrichtung geführt und vor ihrer Formung im gegenseitigen Abstand gehalten werden, während man zwischen die beiden Vorformlinge ein Zubehör einführt, welches dazu bestimmt ist, in den späteren Behälter aufgenommen zu werden.

Dieses Verfahren ist insbesondere hinsichtlich des zur Verfügung stehenden Platzes zur Handhabung der Einbauteile verhältnismäßig günstig, erfordert jedoch einen hohen apparativen Aufwand zur Führung der noch warmplastischen lappenförmigen- oder bahnförmigen Extrudate.

Aus der WO 2010/149336 A2, welches nach dem Anmeldedatum der vorliegenden Erfindung veröffentlicht wurde, ist ein Verfahren und eine Vorrichtung zur Herstellung eines Kunststoffartikels durch Blasformen bekannt, wobei als Halbzeug zur Formung des Blasformobjekts ein geschlitzter Schlauch verwendet wird, der in einem vorhergehenden Prozesschritt hergestellt wird, und ein Einbauteil in das Innere des Vorformlings eingebracht wird. Aus der DE 1 454 947 A ist ein Verfahren zum Blasen von mit Öffnungen versehenen Hohlkörpern nach Art von Flaschen, Ampullen, Kanistern, Rohrfittings oder dergleichen mit einem schlauchförmigen Rohling bekannt. Der abgedichtete Rohling wird bei dem in der DE 1 454 947 A bekannten Verfahren vor dem Fertigblasen innerhalb der noch nicht vollständig geschlossenen Blasform durch die Extruderblasluft zu einem Zwischenhohlkörper aufgeblasen, wobei beim Fertigblasen ein oder mehrere Behälteröffnungen gebildet werden, indem der Werkstoff des Rohlings im Bereich der Einstichstelle durch den Druck der Luft an dem sich von der Einstichstelle nach hinten erweitenden Teil der Zusatzblasdüsen zur Anlage gebracht wird und die Behälteröffnung kalibriert wird.

Aus der JP 56051333 A ist das Extrusionsblasformen rohrförmiger endseitig zu öffnender Artikel aus einem schlauchförmigen Vorformling bekannt, bei welchem wenigstens ein Ende des Vorformlings in einer Art Vorkammer aufgeweitet, aufgeschnitten und mittels eines Kalibrierblasdorns kalibriert wird.

Aus der DE 29 33 212 sind ein Verfahren und eine Vorrichtung zur Herstellung eines Hohlkörpers aus thermoplastischem Kunststoff aus einem schlauchförmigen Rohling im Blaswege bekannt, bei welchen der schlauchförmige Rohling in einem durch die geschlossene Form gebildeten Hohlraum darstellenden Freiraum bei geringerem Blasdruck zu einem Zwischenrohling aufgeblasen wird, dessen Umfang geringer ist als derjenige des fertigen Hohlkörpers.

Weiterer Stand der Technik ist aus den Druckschriften JP 04193521, DE 10 2008 027 824 A1, DE 1 245 579 B, EP 1 238 845 A2 sowie DE 102 05 524 A1 bekannt.

Der Erfindung liegt die Aufgabe zugrunde, zu den vorgenannten Verfahren gemäß DE 602 18 737 T2 oder EP 110 697 B1 eine Alternative bereitzustellen, die insbesondere hinsichtlich der Handhabung der Extrudate vereinfacht ist.

Die Aufgabe wird zunächst gelöst durch ein Verfahren zur Herstellung eines Kunststoffartikels, umfassend das Extrudieren eines schlauchförmigen Vorformlings, sowie das Umformen des Vorformlings innerhalb eines Blasformwerkzeugs unter Anwendung von Differenzdruck zu einem Hohlkörper, wobei zunächst eine erste Aufweitung und teilweise Ausformung des Vorformlings bei nicht vollständig geschlossenem Blasformwerkzeug erfolgt, sodann wenigstens eine Öffnung am Umfang des voraufgeweiteten Vorformlings angebracht wird und in einem nächsten Schritt durch die Öffnung wenigstens ein Einbauteil in das Innere des teilweise ausgeformten Kunststoffartikels eingebracht wird, sowie in einem weiteren Schritt das Blasformwerkzeug vollständig geschlossen und der Kunststoffartikel fertig ausgeformt wird.

Unter "Blasformwerkzeug" ist ein Werkzeug zu verstehen, dass wenigstens zwei Blasformhälften mit jeweils einer Kavität aufweist, die im vollständig geschlossenen Zustand ein Formnest für einen auszuformenden Artikel bilden. Die Blasformhälften können jeweils auf Formaufspannplatten angeordnet sein und einteilig oder mehrteilig ausgebildet sein. Diese können in bekannter Art und Weise Schieber zur Entformung von Hinterschneidungen oder dergleichen aufweisen. Im Rahmen der Erfindung kann das Blasformwerkzeug auch mehr als zwei relativ zueinander verfahrbare Werkzeugteile aufweisen, wobei der Einfachheit halber im Folgenden der Begriff "Blasformhälften" verwendet wird.

Das Verfahren gemäß der Erfindung hat insbesondere den Vorzug, dass jedenfalls aus dem geschlossenen schlauchförmigen Extrudat gearbeitet werden kann. Dies ermöglicht die Herstellung des Extrudats auf herkömmlichen Extrusionsblasformanlagen unter Anwendung der bekannten Maßnahmen zur axialen und/oder radialen Wanddickensteuerung (WDS und PWDS). Darüber hinaus entfällt das maschinentechnisch aufwändige Konzept des Auftrennens und Teilens des Schlauchs zu Bahnen oder Lappen. Trotzdem lassen sich voluminöse Einbauteile sowie auch kleinere Einbauteile in beliebiger Anordnung zueinander an der Wandung des fertigen Artikels platzieren, ohne dass hierzu etwa die lichte Weite des extrudierten Vorformlings beachtet werden müsste. Es sind keine aufwändigen Träger und Dorne zur Platzierung der Einbauteile im Innern des Behälters erforderlich.

Das erfindungsgemäße Verfahren kann dahingehend zusammengefasst werden, dass dieses das nachträgliche Öffnen des bereits voraufgeweiteten und teilweise vorausgeformten Vorformlings vorsieht, derart, dass das Innere des noch nicht fertigen Artikels für Manipulationen und insbesondere für die Anbringung von Einbauteilen frei zugänglich ist. Das Verfahren kombiniert die Vorzüge des klassischen Extrusionsblasformens aus dem geschlossenen Schlauch mit denen des sog. "Twin Sheet Blow Molding-Verfahrens".

Dadurch, dass der Vorformling einseitig geöffnet wird, lassen sich zwischen den nicht vollständig geschlossenen Blasformhälften mittels eines Manipulators ein oder mehrere Einlegeteile oder Einbauteile in das Innere des zu fertigenden Behälters einbringen und dort befestigen, beispielsweise durch Verschweißen mit der noch warmplastischen Behälterwandung.

Das Verfahren gemäß der Erfindung sieht die Ausformung des Extrudats unter Ausnutzung der ersten Hitze, d. h. im Wesentlichen ohne weitere Plastifizierung des Materials vor, dabei ist nicht ausgeschlossen, dass das einzubringende Einbauteil und/oder die Behälterwandung im Bereich der Verschweißung des Einbauteils mit der Behälterwandung partiell zur Verbesserung der Schweißverbindung erwärmt wird.

Bei einer zweckmäßigen Ausgestaltung des Verfahrens gemäß der Erfindung ist vorgesehen, dass die Schließbewegung des Blasformwerkzeugs zweistufig erfolgt, wobei in der ersten Stufe der Schließbewegung wenigstens ein ein- und ausfahrbarer, vorzugsweise zwei die Kavitäten des Blasformwerkzeugs jeweils umrahmender bzw. einfassender Schieber als Formvoreiler den Vorformling unter Bildung wenigstens einer Öffnung zwischen sich einspannt.

Mit den Schiebern/Formvoreilern des Blasformwerkzeugs wird der Vorformling unter Bildung einer "Butzenkammer" zunächst zwischen diesen Formvoreilern eingespannt, wobei der Vorformling bereits in den Kavitäten der Blasformhälften anliegt. Bevorzugt sind die Formvoreiler temperierbar/beheizbar.

Bei einer zweckmäßigen Variante des Verfahrens gemäß der Erfindung ist vorgesehen, dass eine Voraufweitung des Vorformlings derart erfolgt, dass der Vorformling im Bereich der Öffnung der Formvoreiler an den Formvoreilern anliegt, und dass die Kontur der Öffnung des Vorformlings etwa entsprechend der Kontur der durch die Kontur der Formvoreiler gebildeten Öffnung ausgebildet wird.

Der Betrag der Voraufweitung kann beispielsweise so gewählt werden, dass der Vorformling aus der von den Formvoreilern gebildeten Öffnung heraustritt oder sich in diese hineinerstreckt.

Die Öffnung in dem Vorformling kann durch eine geeignete Trennvorrichtung, beispielsweise mittels einer Schneideinrichtung durch die von den Formvoreilern gebildete Öffnung hindurch von außen erzeugt werden, beispielsweise mittels eines Messers, welches auch als Heißmesser ausgebildet sein kann, eines Lasers oder eines Topfschneiders, d. h. einer topfförmigen Schneidkrone, deren Durchmesser etwa dem Durchmesser der von den Formvoreilern gebildeten Öffnung entspricht. Alternativ kann die Öffnung mittels eines Stanzwerkzeugs erzeugt werden.

Zweckmäßigerweise erfolgt eine Aufweitung des Vorformlings in die Blasformhälften sowie das Einbringen des Einbauteils zwischen der ersten und zweiten Stufe der Schließbewegung der Blasformhälften.

Obwohl im Folgenden von einem Einbauteil die Rede ist, ist die Erfindung so zu verstehen, dass selbstverständlich mehrere Einbauteile in den Artikel gebracht werden können.

Auch können durch die seitliche Öffnung des Vorformlingsschlauchs und durch die Öffnung zwischen den Blasformhälften andere Manipulationen innerhalb des zu fertigenden Artikels vorgenommen werden.

Das Verfahren gemäß der Erfindung kann sich auf die Herstellung eines Kraftstoffbehälters beziehen, die Erfindung ist allerdings so zu verstehen, dass jedweder Kunststoffhohlkörper mit dem Verfahren gemäß der Erfindung hergestellt werden kann.

Anstelle einer Öffnung können auch mehrere Öffnungen vorgesehen sein, die jeweils auch für die Aufnahme eines Blasdorns vorgesehen sein können.

Zweckmäßigerweise erfolgt die Einbringung des Einbauteils durch die von den Formvoreilern gebildete Öffnung.

Die Aufweitung des Vorformlings erfolgt in dem Maße, wie dies erforderlich ist, um eine Überlappung des Vorformlingsschlauchs mit den Formvoreilern und/oder den Quetschkanten des Blasformwerkzeugs herzustellen.

Besonders zweckmäßig ist es, wenn das Einbauteil mittels eines vorzugsweise mehrachsigen Manipulators in den teilweise ausgeformten Vorformling eingebracht wird.

Bei einer zweckmäßigen Variante des Verfahrens gemäß der Erfindung ist vorgesehen, dass nach dem Einbringen wenigstens eines Einbauteils und vor dem vollständigen Schließen des Blasformwerkzeugs ein Nachweiten des Vorformlings, vorzugsweise durch Blasluftbeaufschlagung, erfolgt.

Die Blasluftbeaufschlagung kann mittels eines zentral unten zwischen den Blasformhälften vorzusehenden Blasdorns oder mittels eines in die von den Formvoreilern gebildete Öffnung einzusetzenden Blasdorns erfolgen.

Die der Erfindung zugrunde liegende Aufgabe wird weiterhin gelöst durch eine Vorrichtung zur Durchführung des zuvor beschriebenen Verfahrens gemäß Anspruch 10. Die Vorrichtung umfasst wenigstens zwei ein Formnest bildende Blasformhälften, die eine Öffnungs- und Schließbewegung relativ zueinander vollziehen, wobei wenigstens eine Blasformhälfte, vorzugsweise beide, mit wenigstens einem die jeweilige Kavität umrahmenden/einfassenden Schieber als Formvoreiler versehen ist, der mit wenigstens einer Ausnehmung zur Bildung einer Öffnung versehen ist. Die Vorrichtung umfasst weiterhin eine Trennvorrichtung oder ein Stanzwerkzeug zur Erzeugung einer Öffnung in dem Vorformling durch die von den Formvoreilern gebildete Öffnung von aussen hindurch. Die Öffnung dient also einerseits der Herstellung einer Öffnung in dem voraufgeweiteten Vorformling, andererseits kann die Öffnung zur Aufnahme eines Blasdorns und/oder zur Hindurchführung eines Manipulators, beispielsweise zwecks Einbringen von Einbauteilen, dienen. Die Öffnung kann auch in eine auf den Formvoreilern außen vorgesehene Vorkammer münden. Eine solche Vorkammer dient zweckmäßig zur Druckbegrenzung bei der Aufweitung des Vorformlings in die Öffnung. Diese Vorkammer kann beispielsweise durch eine von außen auf die Öffnung aufgesetzte Abdeckung gebildet werden. Eine solche Abdeckung kann mit einer integrierten Trennvorrichtung versehen sein.

Bei einer zweckmäßigen Ausgestaltung der Vorrichtung nach der Erfindung ist vorgesehen, dass dieses wenigstens einen Blasdorn umfasst, der einen umlau fenden Dichtkragen aufweist, welcher bei der Aufweitung des Vorformlings dichtend in Anlage mit den auf Anschlag gefahrenen Formvoreilern bringbar ist. Mittels eines solchen Blasdorns lässt sich beispielsweise das Nachblasen bzw. Nachweiten des Vorformlings vor dem vollständigen Schließen des Blasformwerkzeugs bewerkstelligen.

Zweckmäßigerweise sind die Formvoreiler aus der Trennebene der Blasformhälften ein- und ausfahrbar ausgebildet, beispielsweise hydraulisch.

Zur Vermeidung von zuviel Butzen (Flash) ist es sinnvoll, wenn die Formvoreiler der Kontur der Kavitäten angepasst sind. Dabei müssen die Formvoreiler nicht notwendigerweise jeweils aus einem einzelnen Schiebersegment bestehen, diese können vielmehr aus einer Vielzahl von in der Trennebene der Blasformhälften nebeneinander angeordneten Schiebersegmenten bestehen.

Bei einer zweckmäßigen Ausgestaltung des Blasformwerkzeugs nach der Erfindung ist vorgesehen, dass die Formvoreiler im Bereich der Ausnehmung auf ihrer nach innen weisenden Seite mit Mitteln zur Reckung des Vorformlings versehen sind.

Hierdurch werden zweckmäßigerweise in der durch die Formvoreiler gebildeten Vorkammerkavität in dem Vorformling Dünnstellen erzeugt, die ein Einbringen von Öffnungen erleichtern.

Als Mittel zur Reckung des Vorformlings ist wenigstens ein umlaufender Vorsprung oder ein Streifen mit erhöhter Oberflächenrauhigkeit vorgesehen, an welchem sich der Vorformlingsschlauch dünnzieht.

Um den Vorformling beim Nachweiten in der durch die Formvoreiler gebildeten Vorkammerkavität halten zu können, ist es sinnvoll, wenn die Formvoreiler auf ihrer nach innen weisenden Seite mit Vakuumbohrungen versehen sind. In diesem Bereich lässt sich der Vorformling halten, während ein Nachweiten bzw. ein Nachblasen durchgeführt wird. Etwa entstehende Falten im Bereich der Vorkammerkavität/Butzenkammer können so glattgezogen werden, bevor die Blasformhälften vollständig geschlossen werden und der Artikel fertiggeblasen wird. Unter "Fertigblasen" im Sinne der Erfindung ist die Blasluftbeaufschlagung der Kavität bzw. des Artikels bei vollständig geschlossenem Werkzeug zwecks Spülen und Abkühlen des Artikels zu verstehen.

Die Erfindung wird nachstehend anhand eines in den Zeichnungen dargestellten Ausführungsbeispiels erläutert:
Es zeigen:
- Figur 1: eine perspektivische Ansicht eines Teils eines Extrusionskopfes mit dem aus diesem austretenden Vorformling,
- Figur 2: eine Schnittansicht entlang der Linien II-I, II-II in Figur 1,
- Figur 3: eine perspektivische Ansicht einer Einrichtung zum Blasformen von Kunststoffartikeln gemäß der Erfindung, die den Ablauf des erfindungsgemäßen Verfahrens veranschaulicht,

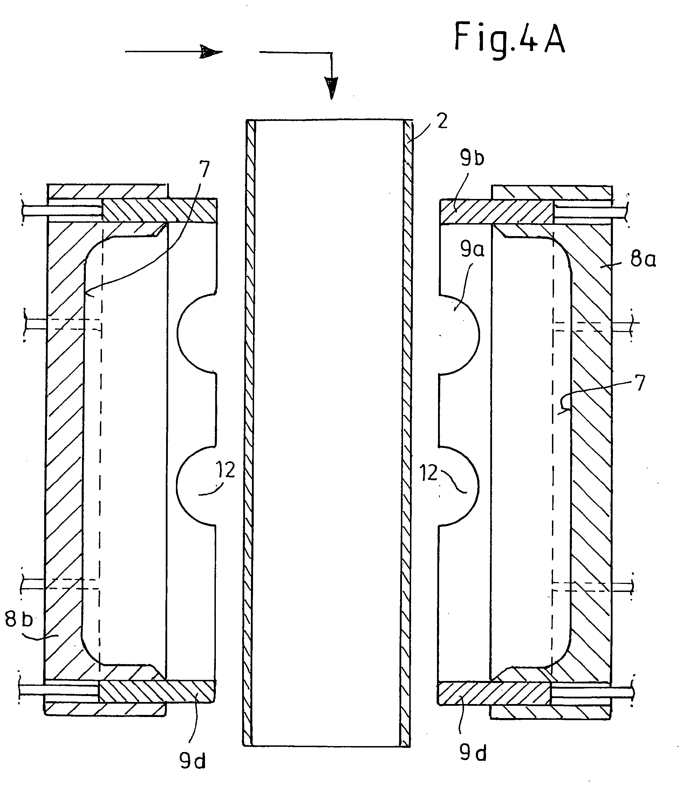

- Figur 4a: eine Schnittansicht durch das Blasformwerkzeug in Figur 3 und den zwischen den Blasformhälften platzierten Vorformling,

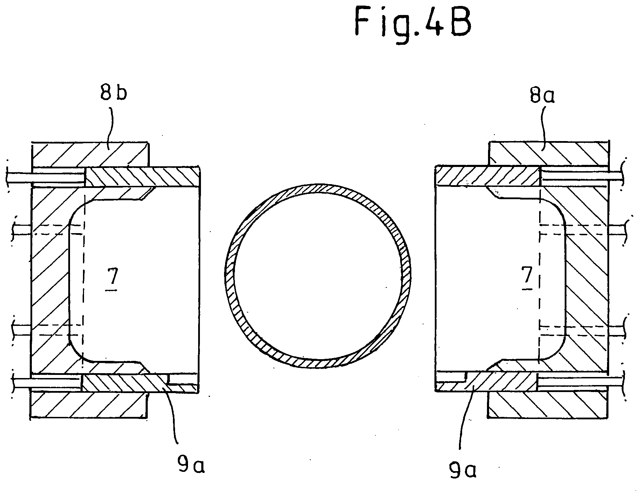

- Figur 4b: eine Draufsicht in Richtung auf den in Figur 4a dargestellten Pfeil,
- Figur 5a: einen Teilschnitt durch das Blasformwerkzeug mit geschlossenen Blasformhälften vor der Aufweitung des Vorformlings,
- Figur 5b: einen Schnitt entlang der Linien B-B in Figur 5a,
- Figur 5c: einen Schnitt entlang der Linien C-C in Figur 5a nach einer Voraufweitung des Vorformlings,
- Figur 5d: eine der Figur 5c entsprechende Ansicht,
- Figur 5e: eine der Figur 5d entsprechende Ansicht, die eine Zwischenaufweitung bzw. das Nachblasen des Vorformlings nach Einbringen des Einbauteils veranschaulicht,
- Figur 6a: das geöffnete Blasformwerkzeug mit zurückgezogenen Formvoreilern,
- Figur 6b: einen Teillängsschnitt durch das Blasformwerkzeug in dem in Figur 6a gezeigten Zustand,
- Figur 7a: einen Querschnitt durch das Blasformwerkzeug in geschlossenem Zustand,
- Figur 7b: einen Querschnitt durch das Blasformwerkzeug und den Artikel bei der Artikelentnahme.

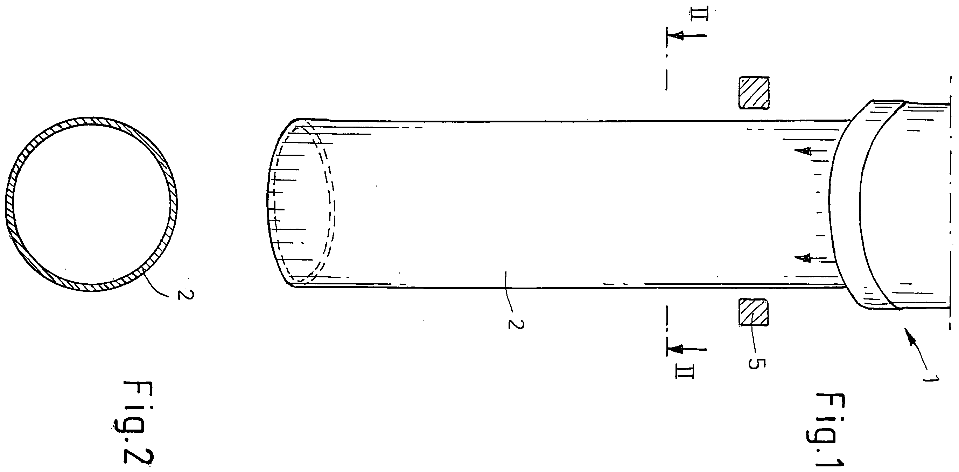

In Figur 1 ist zunächst einmal der Schritt des Extrudierens eines schlauchförmigen Vorformlings 2 nach der Erfindung veranschaulicht. Aus dem mit 1 bezeichneten Extrusionskopf wird zunächst der schlauchförmige Vorformling aus thermoplastischem Kunststoff in schmelzeheißem Zustand ausgestoßen, und zwar in bekannter Art und Weise durch eine Ringspaltdüse des Extrusionskopfes 1. Die Extrusion kann kontinuierlich oder diskontinuierlich erfolgen.

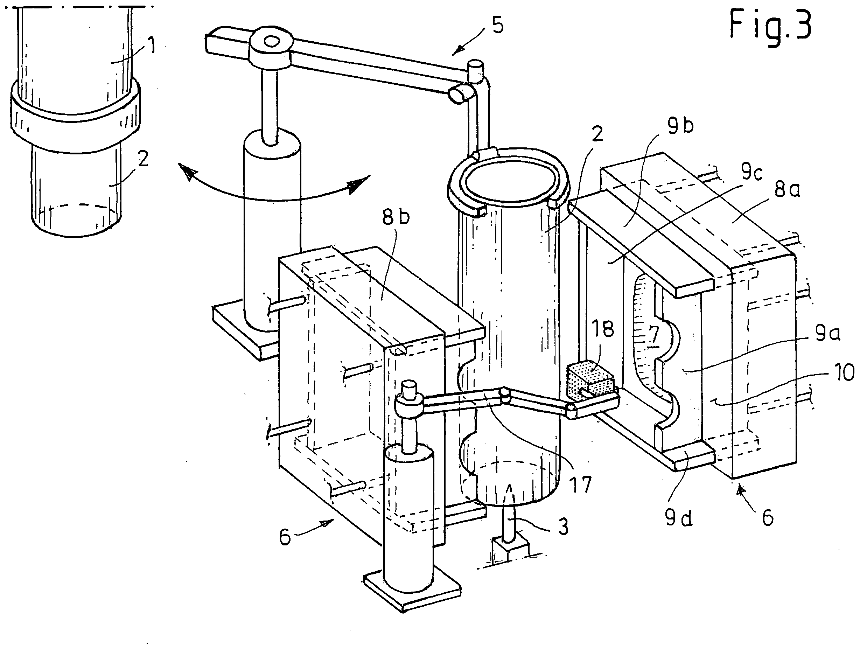

Bei dem hier dargestellten Ausführungsbeispiel ist vorgesehen, den Vorformlingsschlauch 2 mittels eines Greifers von dem Extrusionskopf 1 abzunehmen und zu einem mit 6 bezeichneten Blasformwerkzeug zu verbringen, wie dies in Figur 3 schematisch veranschaulicht ist. Alternativ kann selbstverständlich vorgesehen sein, den Vorformlingsschlauch 2 zwischen die geöffneten Teile des Blasformwerkzeugs 6 zu extrudieren. Weiterhin kann das Blasformwerkzeug an einem relativ zum Extrusionskopf verfahrbaren Schließgestell angeordnet sein.

Der Greifer 5 ist in den Zeichnungen stark vereinfacht dargestellt. Dieser muss nicht notwendigerweise ein kreissegmentförmiges Greifelement aufweisen, vielmehr kann dieser etwa auf einem Kreisbogen oder einem Vieleck angeordnete Greifersegmente mit zur Übernahme des Vorformlingsschlauchs 2 vorgesehenen Saugnäpfen aufweisen. Das Abnehmen des Vorformlingsschlauchs 2 kann durch eine Trennvorrichtung für den Vorformlingsschlauch 2 unterstützt werden. Alternativ kann durch Verengung des Düsenspalts des Extrusionskopfes eine Dünnstelle im Vorformlingsschlauch 2 erzeugt werden, die ein Abreißen desselben mittels des Greifers ermöglicht.

In dem dargestellten Ausführungsbeispiel ist ein Ein-Kavitätenwerkzeug gezeigt, d. h. dass das Blasformwerkzeug Blasformhälften 8a, 8b umfasst, welche jeweils zueinander komplementäre Kavitäten 7 aufweisen, die ein einziges Formnest bilden. Alternativ kann vorgesehen werden, das Blasformwerkzeug 6 als sog. Mehr-Kavitätenwerkzeug auszubilden.

Jede der Blasformhälften 8a, 8b des Blasformwerkzeugs 6 ist mit Schiebern 9a, 9b, 9c, 9d versehen, die vorzugsweise hydraulisch aus der Teilungsebene des Blasformwerkzeugs 6 ausfahrbar und in diese einfahrbar ausgebildet sind. Diese Schieber 9a, 9b, 9c, 9d dienen während der Schließbewegung der Blasformhälften 8a, 8b als Formvoreiler und werden nachstehend so bezeichnet.

Wie insbesondere aus Figur 3 ersichtlich ist, umrahmen die Formvoreiler 9a, 9b, 9c, 9d jeweils die Kavitäten 7 der Blasformhälften 8a, 8b, bzw. bilden eine Einfassung der Kavitäten 7 der Blasformhälften 8a, 8b, wobei aus Gründen einer vereinfachten Darstellung die in der Figur dargestellte Anordnung nicht der Kontur der Kavitäten 7 angepasst ist. Tatsächlich bestehen die Formvoreiler (Schieber) aus mehreren Segmenten 9a, 9b, 9c, 9d, die der Kontur der Kavitäten jeweils angepasst sind, um so den Anfall an Butzen (Flash) möglichst klein zu halten. Die Formvoreiler können auch einteilig ausgebildet sein.

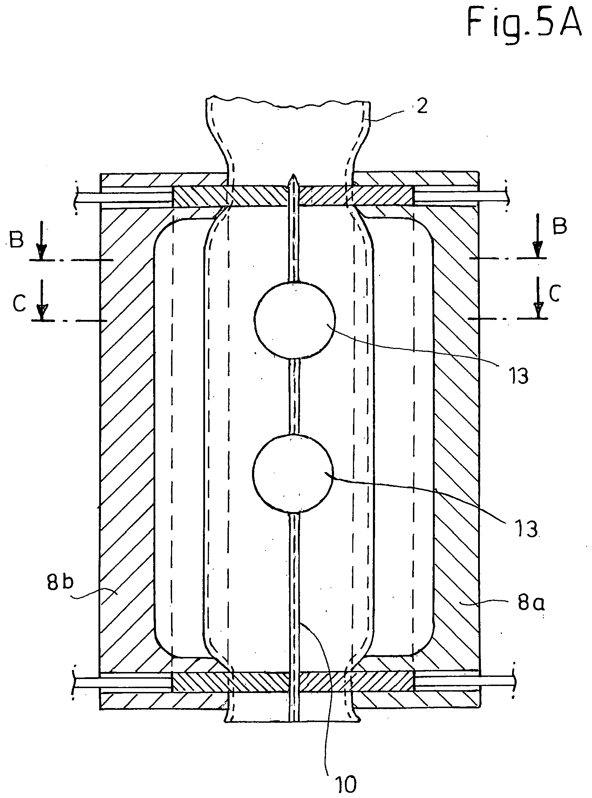

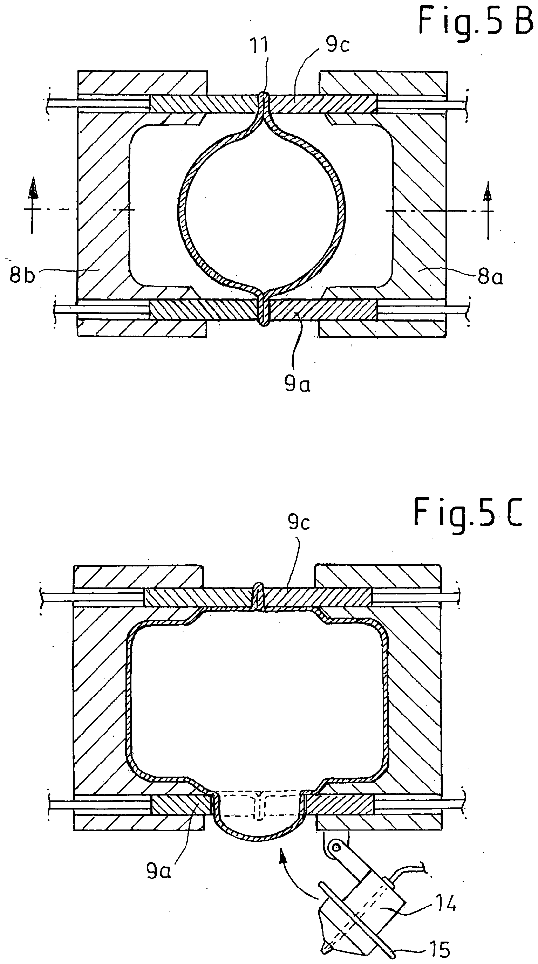

Nachdem der Vorformlingsschlauch 2 in die in Figur 3 gezeigte Stellung verbracht wurde, werden die Blasformhälften 8a, 8b des Blasformwerkzeugs 6 mit den aus der Teilungsebene 10 herausgefahrenen Formvoreilern 9a, 9b, 9c, 9d gegeneinander so verfahren, dass die Formvoreiler 9a, 9b, 9c, 9d die in den Figuren 5a und 5b gezeigte Lage einnehmen. Diese spannen den Vorformlingsschlauch 2 umfänglich unter Bildung eines Butzens 11 zwischen sich ein. In dieser Lage sind die Blasformhälften 8a, 8b nicht vollständig geschlossen, sondern werden mittels der Formvoreiler 9a, 9b, 9c, 9d zueinander auf Abstand gehalten.

Auf einer der Stirnseiten der Blasformhälften 8a, 8b, d. h. denjenigen Seiten, die sich quer zur Teilungsebene 10 des Blasformwerkzeugs 6 erstrecken, sind in den Formvoreiler 9a, 9b, 9c, 9d jeweils zueinander komplementäre Ausnehmungen 12 vorgesehen, welche bei gegeneinander gefahrenen Formvoreilern 9a, 9b, 9c, 9d jeweils Öffnungen 13 bilden, durch welche sich die Teilungsebene 10 der geschlossenen Blasformhälften 8a, 8b erstreckt. Diese Öffnungen sind jeweils bzgl. der gedachten Teilungsebene 10 symmetrisch angeordnet. Nach dem Zusammenfahren der Formvoreiler 9a, 9b, 9c, 9d, beispielsweise durch die Schließbewegung der Blasformhälften 8a, 8b veranlasst (gezwungen), wird der Vorformlingsschlauch 2 unter Bildung des Butzens 11 zusammengequetscht. Ein umlaufender Butzen 11 entsteht nur in den Bereichen außerhalb der Öffnungen 13. Im Bereich der Öffnungen 13 bildet der Vorformling 2, wie dies in den Figuren 5b und 5c veranschaulicht ist, einen Verschluss der Öffnung 13. Nach dem Zusammenfahren der Formvoreiler 9a, 9b, 9c, 9d erfolgt zunächst eine Voraufweitung des Vorformlingsschlauchs 2 innerhalb des durch die Kavitäten 7 gebildeten Formnestes, beispielsweise mittels des Blasdorns 3 (Figur 3), der beispielsweise in bekannter Art und Weise beim Schließen des Formnestes zwischen den Formvoreilern 9a, 9b, 9c, 9d bzw. zwischen den Schließkanten des Blasformwerkzeugs 6 eingespannt werden kann.

Der Vorformlingsschlauch 2 liegt dann in der in Figur 5c veranschaulichten Art und Weise an den Wandungen der Kavitäten 7 an, wobei dieser je nach Wahl des Blasdrucks in die Öffnungen 13 der Formvoreiler 9a, 9b, 9c eintritt oder aus diesen heraustritt.

In einem weiteren Verfahrensschritt wird der so bereits voraufgeweitete Vorformling 7 im Bereich der Öffnungen 13 aufgetrennt bzw. mit Durchbrüchen versehen. Eine hierzu verwendete Trennvorrichtung in Form eines Heißmessers, einer Laserschneideinrichtung oder in Form eines sog. "Topfschneiders" (einer Schneideinrichtung mit einer Schneidkrone), ist in der Zeichnung nicht dargestellt.

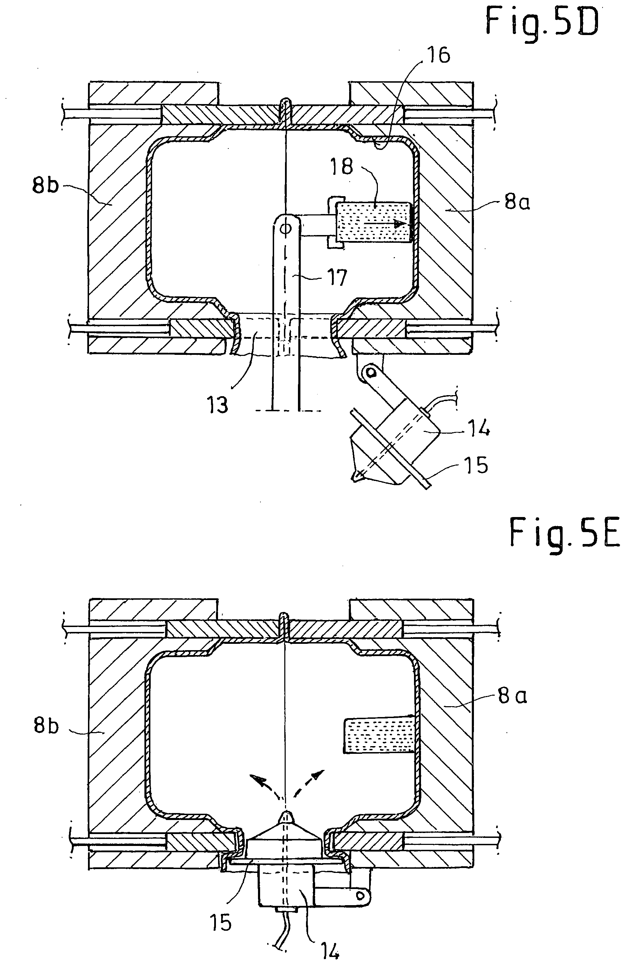

In den nunmehr geöffneten, aufgeweiteten und teilweise ausgeformten Vorformlingsschlauch 2 können, wie dies beispielsweise in Figur 5d gezeigt ist, mittels eines mehrachsigen Manipulators 17 Einbauteile 18 in den halbfertigen Artikel 16 eingeführt werden. Diese Einbauteile können beispielsweise mit der noch warmplastischen Wandung des halbfertigen Artikels 16 verschweißt, vernietet oder verklebt werden.

An dieser Stelle sei nochmals erwähnt, dass die Anzahl und Lage der Einbauteile 18 sowie die Art der Einbauteile 18 für die Erfindung nicht kritisch sind. Im vorliegenden Fall kann beispielsweise der herzustellende Kunststoffartikel ein Kraftstoffbehälter sein, in den ein Schwalltopf als Einbauteil 18 eingebracht wird.

In einem weiteren Verfahrensschritt ist ein Nachweiten des halbfertigen Artikels 16 bzw. ein Nachblasen mit Hilfe von Blasdornen 14 vorgesehen, die schwenkbeweglich an einer Blasformhälfte 8b angeschlagen sind. Diese Blasdorne 14 können auch an einer separaten Einrichtung befestigt sein. Dies ist beispielsweise in der Figur 5e veranschaulicht. Die Blasdorne 14 sind jeweils mit einem Dichtkragen 15 versehen, der in diesem Bereich die Öffnungen 13 gegen die Formvoreiler 9a abdichtet. Das Nachblasen des halbfertigen Artikels 16 dient dazu, einen etwaigen Faltenwurf des Vorformlings 2 im Bereich zwischen den Formvoreilern 9a, 9b, 9c, 9d und den Dichtkanten der Blasformwerkzeuge 8a, 8b zu verhindern.

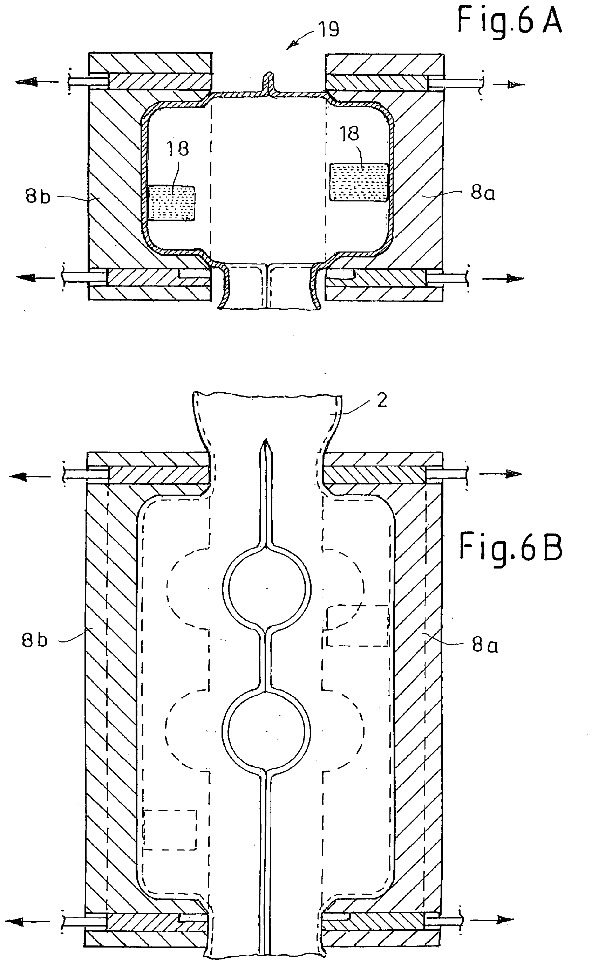

In einem weiteren Verfahrensschritt werden sodann die Formvoreiler 9a, 9b, 9c, 9d eingezogen (siehe Figur 6a), und die Blasformhälften 8a, 8b vollziehen eine Schließbewegung, bei welcher sich das über die Breite des Spalts 19 zwischen den Blasformhälften 8a, 8b erstreckende Wandungsmaterial des halbfertigen Artikels 16 zu einem weiteren Butzen 20 zusammengequetscht wird.

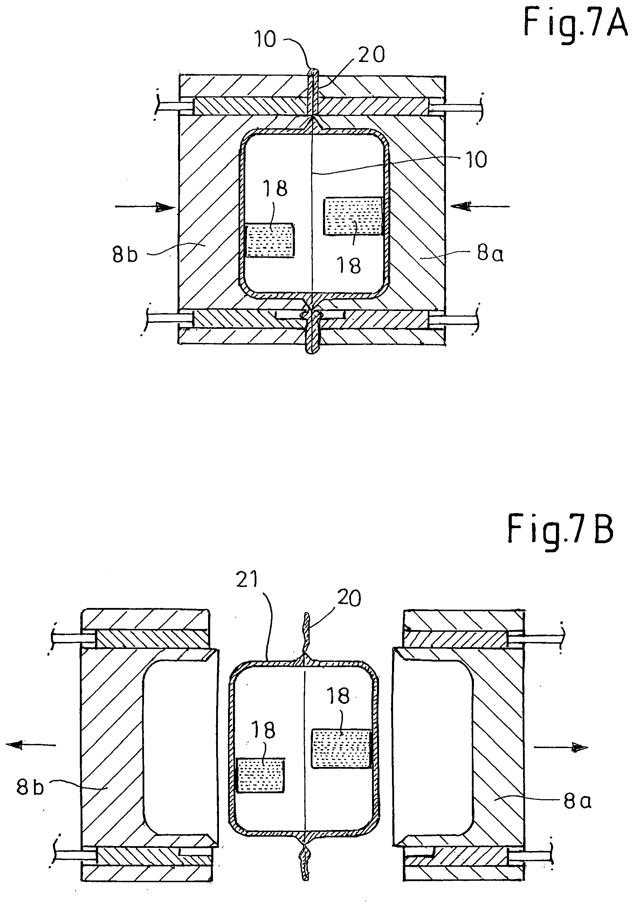

Aus Gründen einer vereinfachten Darstellung ist der Spalt 19 in den Zeichnungen übertrieben groß dargestellt. Der fertige Artikel 21 erhält die in den Figuren 7a und 7b gezeigte Gestalt. Die Blasformhälften 8a, 8b öffnen sich bzw. werden in Richtung der in Figur 7b gezeigten Pfeile auseinandergefahren und der fertige Artikel 21 kann mittels einer Entnahmeeinrichtung entnommen werden. Anschließend wird der fertige Artikel 21 entbutzt.

Bei dem in Figur 3 gezeigten Ausführungsbeispiel sind der Manipulator 17, der als dreiachsiger Roboterarm ausgebildet ist, und der ebenfalls dreiachsige Greifer 5 auf jeweils gegenüberliegenden Seiten des Blasformwerkzeugs 6 angeordnet. Diese könnten alternativ auf einer Seite des Blasformwerkzeugs 6 angeordnet sein.

### Bezugszeichen:

- 1: Extrusionskopf
- 2: Vorformlingsschlauch
- 3: Blasdorn
- 5: Greifer
- 6: Blasformwerkzeug
- 7: Kavitäten
- 8a, 8b: Blasformhälften
- 9a - 9d: Formvoreiler
- 10: Teilungsebene
- 11: Butzen
- 12: Ausnehmungen
- 13: Öffnungen
- 14: Blasdorn
- 15: Dichtkragen
- 16: halbfertiger Artikel
- 17: Manipulator
- 18: Einbauteil
- 19: Spalt
- 20: Butzen
- 21: fertiger Artikel

## Patentansprüche

1. Verfahren zur Herstellung eines Kunststoffartikels (21) umfassend das Extrudieren eines schlauchförmigen Vorformlings (2) sowie das Umformen des Vorformlings (2) innerhalb eines Blasformwerkzeugs (6) unter Anwendung von Differenzdruck zu einem Hohlkörper, wobei zunächst eine erste Aufweitung und teilweise Ausformung des Vorformlings (2) bei nicht vollständig geschlossenem Blasformwerkzeug (6) erfolgt, sodann wenigstens eine Öffnung (13) am Umfang des voraufgeweiteten Vorformlings angebracht wird, in einem nächsten Schritt durch die Öffnung (13) wenigstens ein Einbauteil (18) in das Innere des teilweise ausgeformten Kunststoffartikels (16) eingebracht wird, sowie in einem weiteren Schritt das Blasformwerkzeug (6) vollständig geschlossen wird und der Kunststoffartikel (21) fertig ausgeformt wird.

2. Verfahren nach Anspruch 1, **dadurch gekennzeichnet, dass** die Schließbewegung des Blasformwerkzeugs (6) zweistufig erfolgt, wobei in einer ersten Stufe der Schließbewegung wenigstens ein, vorzugsweise mehrere, die Kavitäten (7) der Blasformwerkzeuge umrahmende Schieber, als Formvoreiler (9a, 9b, 9c, 9d) den Vorformling unter Bildung wenigstens einer Öffnung (12) zwischen sich einspannen.

3. Verfahren nach Anspruch 2, **dadurch gekennzeichnet, dass** eine Voraufweitung des Vorformlings (2) derart erfolgt, dass der Vorformling (2) im Bereich der von den Formvoreilern (9a, 9b, 9c, 9d) gebildeten Öffnung an den Formvoreilern anliegt, und dass die Kontur der Öffnung (13) des Vorformlings etwa entsprechend der Kontur der durch die Formvoreiler gebildeten Öffnung (12) ausgebildet wird.

4. Verfahren nach einem der Ansprüche 2 oder 3, **dadurch gekennzeichnet, dass** der Betrag der Voraufweitung so gewählt wird, dass der Vorformling (2) aus der von den Formvoreilern gebildeten Öffnung (12) heraustritt oder sich in diese hineinerstreckt.

5. Verfahren nach einem der Ansprüche 1 bis 4, **dadurch gekennzeichnet, dass** die Öffnung in dem Vorformling mittels einer Schneideinrichtung durch die von den Formvoreilern (9a, 9b, 9c, 9d) gebildete Öffnung (12) hindurch von außen erzeugt wird.

6. Verfahren nach einem der Ansprüche 2 bis 5, **dadurch gekennzeichnet, dass** zwischen der ersten Stufe und der zweiten Stufe der Schließbewegung zunächst eine Aufweitung des Vorformlings in die Blasformhälften und in einem weiteren Schritt das Einbringen des Einbauteils (18) erfolgt.

7. Verfahren nach einem der Ansprüche 1 bis 6, **dadurch gekennzeichnet, dass** das Einbringen des Einbauteils (18) durch die von den Formvoreilern gebildete Öffnung (12) erfolgt.

8. Verfahren nach einem der Ansprüche 1 bis 7, **dadurch gekennzeichnet, dass** das Einbauteil mittels eines vorzugsweise mehrachsigen Manipulators (17) in den teilweise ausgeformten Vorformling (16) eingebracht wird.

9. Verfahren nach einem der Ansprüche 1 bis 8, **dadurch gekennzeichnet, dass** nach dem Einbringen wenigstens eines Einbauteils (18) und vor dem vollständigen Schließen des Blasformwerkzeugs ein Nachweiten des Vorformlings, vorzugsweise durch Blasluftbeaufschlagung erfolgt.

10. Vorrichtung (6) zur Herstellung eines Kunststoffartikels (21), nach dem Verfahren nach einem der Ansprüche 1 bis 9, umfassend wenigstens zwei ein Formnest bildende Blasformhälften (8a, 8b), die eine Öffnungs- und Schließbewegung relativ zueinander vollziehen, wobei wenigstens eine Blasformhälfte, vorzugsweise beide, mit einem wenigstens einem die jeweilige Kavität umrahmenden Schieber (9a, 9b, 9c, 9d) als Formvoreiler versehen ist, der mit wenigstens einer Ausnehmung zur Bildung einer Öffnung (13) versehen ist, weiterhin umfassend eine Trennvorrichtung oder ein Stanzwerkzeug zur Erzeugung einer Öffnung in dem Vorformling durch die von den Formvoreilern (9a, 9b, 9c, 9d) gebildete Öffnung (13) von außen hindurch.

11. Vorrichtung (6) nach Anspruch 10, **dadurch gekennzeichnet, dass** die Formvoreiler (9a, 9b, 9c, 9d) aus der Trennebene (10) der Blasformhälften (8a, 8b) ein- und ausfahrbar ausgebildet sind.

12. Vorrichtung nach einem der Ansprüche 10 oder 11, **dadurch gekennzeichnet, dass** die Formvoreiler (9a, 9b, 9c, 9d) der Kontur der Kavitäten (7) angepasst sind.

13. Vorrichtung nach einem der Ansprüche 10 bis 12, **dadurch gekennzeichnet, dass** die Formvoreiler (9a, 9b, 9c, 9d) im Bereich der Ausnehmung (12) auf ihrer nach innen weisenden Seite mit Mitteln zur Reckung des Vorformlings (2) bei dessen Aufweitung versehen sind.

14. Vorrichtung nach Anspruch 13, **dadurch gekennzeichnet, dass** als Mittel zur Reckung des Vorformlings wenigstens ein umlaufender Vorsprung oder ein Streifen mit erhöhter Oberflächenrauhigkeit vorgesehen ist.

15. Vorrichtung nach einem der Ansprüche 10 bis 14, **dadurch gekennzeichnet, dass** die Formvoreiler (9a, 9b, 9c, 9d) auf ihrer nach innen weisenden Seite mit Vakuumbohrungen versehen sind.

16. Vorrichtung nach einem der Ansprüche 10 bis 15, **dadurch gekennzeichnet, dass** die Formvoreiler (9a, 9b, 9c, 9d) temperierbar sind.

## Claims

1. Method for producing a plastics material article (21), said method including the extruding of a tube-shaped parison (2) and the re-forming of the parison (2) into a hollow body within a blow mold (6) by applying differential pressure, wherein initially a first expanding and partial shaping of the parison (2) is carried out with the blow mold (6) not completely closed, then at least one opening (13) is provided on the circumference of the pre-expanded parison, in a next step at least one part to be built-in (18) is introduced through the opening (13) into the interior of the partially shaped plastics material article (16), and in a further step the blow mold (6) is closed completely and the blow molding of the plastics material article (21) is completed.

2. Method according to Claim 1, **characterized in that** the closing movement of the blow mold (6) is effected in two steps, wherein in a first step of the closing movement at least one, preferably several, slides which frame the cavities (7) of the blow molds, as shape inducing means (9a, 9b, 9c, 9d), clamp the parison thus forming at least one opening (12) between them.

3. Method according to Claim 2, **characterized in that** a pre-expanding of the parison (2) is effected in such a manner that the parison (2) abuts against the shape inducing means in the region of the opening formed by the shape inducing means (9a, 9b, 9c, 9d), and **in that** the contour of the opening (13) of the parison is realized approximately corresponding to the contour of the opening (12) formed by the shape inducing means.

4. Method according to either of Claims 2 and 3, **characterized in that** the amount of the pre-expanding is selected such that the parison (2) extends out of the opening (12) formed by the shape inducing means or extends into said opening.

5. Method according to one of Claims 1 to 4, **characterized in that** the opening in the parison is generated from the outside through the opening (12) formed by the shape inducing means (9a, 9b, 9c, 9d) by means of a cutting device.

6. Method according to one of Claims 2 to 5, **characterized in that** between the first step and the second step of the closing movement, first of all the parison is expanded into the blow mold halves and in a further step the part to be built-in (18) is introduced.

7. Method according to one of Claims 1 to 6, **characterized in that** the part to be built-in (18) is introduced through the opening (12) formed by the shape inducing means.

8. Method according to one of Claims 1 to 7, **characterized in that** the part to be built-in is introduced into the partially shaped parison (16) by means of a preferably multiaxial manipulator (17).

9. Method according to one of Claims 1 to 8, **characterized in that** after at least one part to be built-in (18) has been introduced and prior to the blow mold being closed completely, the parison is re-expanded, preferably by being acted upon by a blast of air.

10. Device (6) for producing a plastics material article (21), according to the method according to one of Claims 1 to 9, said device including at least two blow mold halves (8a, 8b) which form a mold cavity and which carry out an opening and closing movement in relation to each other, wherein at least one blow mold half, preferably both of them, is provided with at least one slide (9a, 9b, 9c, 9d) which frames the respective cavity as shape inducing means and is provided with at least one recess for forming an opening (13), furthermore comprising a separating device or a stamping tool for generating an opening in the parison from the outside through the opening (13) formed by the shape inducing means (9a, 9b, 9c, 9d).

11. Device (6) according to Claim 10, **characterized in that** the shape inducing means (9a, 9b, 9c, 9d) are realized so as to be extendible into and retractable out of the parting plane (10) of the blow mold halves (8a, 8b).

12. Device according to either of Claims 10 and 11, **characterized in that** the shape inducing means (9a, 9b, 9c, 9d) are adapted to the contour of the cavities (7).

13. Device according to one of Claims 10 to 12, **characterized in that** the shape inducing means (9a, 9b, 9c, 9d) are provided in the region of the recess (12) on the inwardly pointing side thereof with means for stretching the parison (2) during the expanding of the same.

14. Device according to Claim 13, **characterized in that** at least one circumferential projection or a strip with increased surface roughness is provided as means for stretching the parison.

15. Device according to one of Claims 10 to 14, **characterized in that** the shape inducing means (9a, 9b, 9c, 9d) are provided on the inwardly pointing side thereof with vacuum bores.

16. Device according to one of Claims 10 to 15, **characterized in that** the shape inducing means (9a, 9b, 9c, 9d) can be tempered.

## Revendications

1. Procédé de fabrication d'un article (21) en matière synthétique, le procédé comprenant l'extrusion d'une préforme tubulaire (2) et la mise en forme de la préforme (2) à l'intérieur d'un outil de moulage par soufflage (6) par application d'une pression différentielle pour obtenir un corps creux, une première expansion et un moulage partiel de la préforme (2) étant tout d'abord effectués avec un outil de moulage par soufflage (6) non complètement fermé, puis au moins une ouverture (13) étant ménagée à la périphérie de la préforme pré-expansée, au moins un élément d'insertion (18) à l'intérieur de l'article en matière synthétique (16) partiellement moulé étant introduit à une étape suivante à travers l'ouverture (13) et, dans une autre étape, l'outil de moulage par soufflage (6) étant fermé complètement et l'article (21) en matière synthétique étant mis sous une forme finale.

2. Procédé selon la revendication 1, **caractérisé en ce que** le mouvement de fermeture de l'outil de moulage par soufflage (6) est effectué en deux étapes, au moins un coulisseau, de préférence une pluralité de coulisseaux, se présentant sous la forme d'un précurseur de moulage (9a, 9b, 9c, 9d) et encadrant les cavités (7) des outils de moulage par soufflage, enserrant entre eux, dans une première étape du mouvement de fermeture, la préforme pour former au moins une ouverture (12).

3. Procédé selon la revendication 2, **caractérisé en ce qu'**une pré-expansion de la préforme (2) est effectuée de telle sorte que, dans la région de l'ouverture formée par les précurseurs de moulage (9a, 9b, 9c, 9d), la préforme (2) vient en appui sur les précurseurs de moulage et **en ce que** le contour de l'ouverture (13) de la préforme est formé de manière à correspondre approximativement au contour de l'ouverture (12) formée par les précurseurs de moulage.

4. Procédé selon l'une des revendications 2 ou 3, **caractérisé en ce que** le niveau de pré-expansion est choisi de telle sorte que la préforme sorte de l'ouverture (12), formée par les précurseurs de moulage, ou s'étende à l'intérieur de ceux-ci.

5. Procédé selon l'une des revendications 1 à 4, **caractérisé en ce que** l'ouverture dans la préforme est réalisée depuis l'extérieur à travers l'ouverture (12), formée par les précurseurs de moulage (9a, 9b, 9c, 9d), au moyen d'un dispositif de découpe.

6. Procédé selon l'une des revendications 2 à 5, **caractérisé en ce qu'**une expansion de la préforme est tout d'abord effectuée dans les demi-coquilles de moulage par soufflage entre la première étape et la deuxième étape du mouvement de fermeture et l'introduction de l'élément d'insertion (18) est effectuée à une étape ultérieure.

7. Procédé selon l'une des revendications 1 à 6, **caractérisé en ce que** l'introduction de l'élément d'insertion (18) est effectuée à travers l'ouverture formée par les précurseurs de moulage (12).

8. Procédé selon l'une des revendications 1 à 7, **caractérisé en ce que** l'élément d'insertion est introduit dans la préforme (16), partiellement mise en forme, au moyen d'un manipulateur (17) de préférence multiaxes.

9. Procédé selon l'une des revendications 1 à 8, **caractérisé en ce qu'**après l'introduction d'au moins un élément d'insertion (18) et avant la fermeture complète de l'outil de moulage par soufflage, une nouvelle expansion de la préforme est effectuée de préférence par apport d'air de soufflage.

10. Dispositif (6) de fabrication d'un article (21) en matière synthétique selon le procédé selon l'une des revendications 1 à 9, comprenant au moins deux demi-coquilles de moulage par soufflage (8a, 8b), formant une cavité de moulage, qui effectuent un mouvement d'ouverture et de fermeture l'une par rapport à l'autre, au moins une demi-coquille de moulage par soufflage, de préférence les deux, étant pourvue d'au moins un coulisseau (9a, 9b, 9c, 9d) se présentant sous la forme d'un précurseur de moulage et encadrant la cavité respective, lequel coulisseau est pourvu d'au moins un évidement destiné à former une ouverture (13), comprenant en outre un séparateur ou un outil de poinçonnage destiné à ménager une ouverture dans la préforme depuis l'extérieur à travers l'ouverture (13) formée par les précurseurs de moulage (9a, 9b, 9c, 9d).

11. Dispositif (6) selon la revendication 10, **caractérisé en ce que** les précurseurs de moulage (9a, 9b, 9c, 9d) sont conçus pour être déployés et rétractés par rapport au plan de séparation (10) des demi-coquilles de moulage par soufflage (8a, 8b).

12. Dispositif selon l'une des revendications 10 ou 11, **caractérisé en ce que** les précurseurs de moulage (9a, 9b, 9c, 9d) sont adaptés au contour des cavités (7).

13. Dispositif selon l'une des revendications 10 à 12, **caractérisé en ce que** les précurseurs de moulage (9a, 9b, 9c, 9d) sont munis, dans la région de l'évidement (12) sur son côté tourné vers l'intérieur, de moyens d'étirage de la préforme (2) lors de son expansion.

14. Dispositif selon la revendication 13, **caractérisé en ce qu'**il est prévu comme moyen d'étirage de la préforme au moins une saillie périphérique ou une bande à rugosité de surface accrue.

15. Dispositif selon l'une des revendications 10 à 14, **caractérisé en ce que** les précurseurs de moulage (9a, 9b, 9c, 9d) sont munis, sur leur côté tourné vers l'intérieur, de trous de mise sous vide.

16. Dispositif selon l'une des revendications 10 à 15, **caractérisé en ce que** les précurseurs de moulage (9a, 9b, 9c, 9d) sont régulables en température.
